(19) **Europäisches Patentamt**
**European Patent Office**
**Office européen des brevets**

(11) **EP 2 299 605 B1**

(12) **FASCICULE DE BREVET EUROPEEN**

(45) Date de publication et mention
de la délivrance du brevet:
**09.11.2016 Bulletin 2016/45**

(51) Int Cl.:
***H04B 7/10*** *(2006.01)*      ***H04W 52/42*** *(2009.01)*
***H04B 17/336*** *(2015.01)*

(21) Numéro de dépôt: **10181863.1**

(22) Date de dépôt: **11.08.2003**

(54) **Procédé d'émission de signaux radio en diversité de polarisation et système de radiocommunication associé**

Verfahren zur Übertragung von Funksignalen mithilfe der Polarisationsdiversität und entsprechendes Funkkommunikationssystem

Method for transmission of radio signals with polarization diversity and corresponding radiocommunication system

(84) Etats contractants désignés:
**DE FR GB**

(30) Priorité: **27.08.2002 FR 0210613**

(43) Date de publication de la demande:
**23.03.2011 Bulletin 2011/12**

(60) Demande divisionnaire:
**11187137.2 / 2 456 085**

(62) Numéro(s) de document de la (des) demande(s)
initiale(s) en application de l'article 76 CBE:
**03292014.2 / 1 394 962**

(73) Titulaire: **BlackBerry Limited
Waterloo, ON N2K 0A7 (CA)**

(72) Inventeurs:
• **Lucidarme, Thierry
F-78180, Montigny-Le-Bretonneux (FR)**
• **Ben Rached, Nidham
F-75017, Paris (FR)**

(74) Mandataire: **Hibbert, Juliet Jane Grace et al
Kilburn & Strode LLP
20 Red Lion Street
London WC1R 4PJ (GB)**

(56) Documents cités:
**WO-A-01/54230**      **WO-A-02/103928**
**US-B1- 6 438 362**

**Description**

La présente invention concerne le domaine des radio-communications. Elle trouve notamment application dans les systèmes de radio-communication à diversité de polarisation.

Traditionnellement, les systèmes de radio-communication avec des mobiles utilisent des techniques de traitement en diversité qui permettent d'améliorer leurs performances. Le traitement en diversité repose sur la combinaison de l'information reçue à partir de plusieurs signaux transmis d'une source vers un destinataire. La diversité peut être introduite sur divers paramètres, comme le temps, l'espace, la fréquence ou la polarisation d'une onde électromagnétique, ce qui donne lieu à de multiples techniques.

Différentes méthodes de diversité d'émission sont par exemple actuellement prévues dans les réseaux cellulaires de troisième génération de type UMTS ("Universal Mobile Télécommunications System") dans le sens descendant (du réseau vers les mobiles). Une première catégorie de méthodes, dites méthodes de diversité d'émission en boucle ouverte mettent en oeuvre les schémas STTD ("Space Time Transmit Diversity") ou TSTD ("Time Switch Transmit Diversity").

Le schéma de diversité STTD repose sur un codage espace-temps. Selon ce schéma, deux signaux $s_0$ et $s_1$ sont simultanément transmis à un instant t et sur une période T d'un temps symbole sur deux antennes 0 et 1, respectivement. A l'instant t + T, les signaux - $s_1^*$ et $s_0^*$ sont simultanément transmis sur une période T sur les antennes 0 et 1, respectivement (le symbole "*" désignant l'opération de conjugaison complexe). Il permet ainsi, sur un système à deux antennes en émission et une antenne en réception, d'obtenir le même ordre de diversité que sur un système à une antenne en émission, deux antennes en réception dont les signaux sont traités par un récepteur à diversité utilisant la méthode de combinaison optimale ("Maximal Ratio Combining", MRC).

Le schéma STTD tel qu'appliqué dans les réseaux de type UMTS est décrit au paragraphe 5.3.1.1.1 de la spécification technique 3G TS 25.211, "Physical channels and mapping of transport channels onto physical channels (FDD)", version 3.9.0 publiée en décembre 2001 par le 3GPP ("3rd Génération Partnership Project").

La diversité d'émission en boucle fermée est aussi mise en oeuvre dans ces réseaux de troisième génération. Une description détaillée en est donnée au paragraphe 7 de la spécification technique 3G TS 25.214, "Physical layer procédures (FDD) - Release 1999", version 3.9.0 , publiée en décembre 2001 par le 3GPP.

Selon ce schéma, un signal est émis à partir de deux antennes, après avoir été pondéré sur chaque branche d'émission par un poids destiné à corriger sa phase et/ou son amplitude afin de maximiser la puissance du signal utile reçue par le récepteur. Une boucle de rétroaction permet la mise à jour à l'émetteur du vecteur de poids optimal. Un tel schéma est potentiellement sensible à la vitesse de déplacement du récepteur. Une vitesse élevée pourra exiger une correction de phase et une mise à jour du vecteur de pondération plus rapide que la vitesse de la boucle de rétroaction actuellement prévue.

Les stations de base de systèmes cellulaires qui exploitent une diversité de polarisation utilisent par exemple un système d'antenne à polarisation croisée ("cross-polar"), c'est-à-dire composé de deux antennes placées au même endroit et agencées à 90° l'une de l'autre (l'une est par exemple sensible à la polarisation verticale, et l'autre sensible à la polarisation horizontale). Le signal transmis est reçu par l'intermédiaire d'un système d'antenne à diversité de polarisation dans deux branches du récepteur. Des techniques de combinaison permettent alors de tirer parti de l'indépendance des comportements sur le trajet de propagation de signaux à polarisations orthogonales. Plus spécifiquement, le gain de diversité de polarisation réduite de la rotation de polarisation lors des réflexions aléatoires de l'onde électromagnétique transmise sur des obstacles. De manière classique, on admet que les signaux reçus en diversité de polarisation doivent être faiblement corrélés pour que la combinaison fournisse un gain qui justifie la mise en oeuvre de cette technique. Lee et Yeh ("Polarization diversity system for mobile radio", IEEE Trans. Com., vol. COM-20, n°5, pp. 912-922, 1972) ont considéré qu'une diversité efficace peut être atteinte avec un coefficient de corrélation en dessous de 0.7.

La présente invention se rapporte notamment à un schéma de diversité duale de polarisation en émission. Dans un tel schéma, l'émission radio est répartie sur deux unités agencées pour émettre chacune un signal dans une polarisation prédéterminée. Il peut par exemple être mis en oeuvre dans une station de base pourvue d'un système d'antenne à polarisation croisée, et de deux unités d'émission radio, l'une étant prévue pour émettre en polarisation linéaire verticale, et l'autre en polarisation linéaire horizontale.

De telles stations de base sont décrites par exemple dans US-A-6 411 824 et WO01/54230 et US643862.

La demande WO01/54230 décrit en particulier un système permettant de diminuer les effets des évanouissements rapides ("fast fading") observés sur un canal de communication avec un mobile. Selon la méthode décrite, une unité de transmission (d'une station de base ou d'un mobile) balaye des états prédéterminés de polarisation d'émission. La sélection d'un état optimal s'effectue selon un procédé en boucle ouverte ou en boucle fermée. Un tel procédé nécessite un rythme de mise à jour de l'optimum de polarisation au sens de la minimisation des effets du fading correspondant à la rapidité d'évolution de ce phénomène. Dans l'exemple décrit, l'adaptation est ainsi effectuée à un rythme de l'ordre d'une trame d'une durée de 10 ms. Une telle rapidité est peu compatible avec un procédé en boucle fermée, le rythme de la boucle de rétroaction imposant une charge excessive sur l'interface air compte tenu des avantages procurés par le procédé.

Le brevet US643862 décrit un procédé de caractéristiques d'une onde radio se propageant sur la base d'un signal de référence, dans lequel le signal de référence est obtenu en recevant et en démodulant les ondes radio propagés, comprenant les étapes consistant à mesurer: estimer les caractéristiques d'une propagation de trajet, à travers laquelle l'onde radio a été émise, sur la base du signal de référence; déterminer une puissance de signal souhaité et une puissance de signal d'interférence de l'onde radio se propageant sur la base des caractéristiques estimées, et la dérivation d'un SIR en effectuant des calculs sur la puissance de signal désirée et la puissance d'interférence de signal.

Un but de la présente invention est de proposer un autre mode de diversité de polarisation, qui procure un gain de réception appréciable sans chercher à suivre les évanouissements rapides du canal, ce qui imposerait une charge de signalisation difficilement acceptable.

L'invention propose ainsi un procédé d'émission d'un signal radio en diversité de polarisation, dans lequel on transmet plusieurs versions du signal radio ayant des polarisations différentes depuis une première station vers une seconde station. Selon l'invention, on règle de manière adaptative les puissances d'émission respectives desdites versions du signal radio en fonction de mesures effectuées par la première station sur des signaux transmis par la seconde station.

Le procédé de radiocommunication entre un terminal de radiocommunication et une infrastructure de réseau incorporant une station de radiocommunication, comprenant les étapes suivantes: de réception et de traitement par le terminal de radiocommunication de plusieurs versions d'un signal émis en diversité de polarisation selon n_pol polarisations par ladite station de radiocommunication; de mesure par ledit terminal de radiocommunication, pour certaines au moins des versions d'un signal émis par ladite station de radiocommunication selon une polarisation déterminée parmi n_pol, une contribution moyenne en puissance du bruit interférant un signal utile relatif audit signal émis; de transmission par ledit terminal de radiocommunication de ladite contribution moyenne en puissance du bruit, mesurée pour chaque polarisation déterminée parmi n_pol, à l'infrastructure de réseau de radiocommunication; de mesure de paramètres dans l'infrastructure de réseau à partir de signaux transmis par le terminal de radiocommunication; d'estimation dans l'infrastructure de réseau d'une répartition optimale d'une puissance entre les polarisations d'émission; et de réglage adaptatif des puissances d'émission respectives desdites versions du signal en fonction desdites paramètres mesurés pour obtenir la répartition optimale de la puissance d'émission entre les polarisations; ladite contribution moyenne en puissance du bruit, mesurée pour chaque polarisation déterminée parmi n_pol, étant utilisées par la station de radiocommunication pour commander de manière adaptative des puissances d'émission respectives desdites versions du signal pour obtenir une distribution de puissance de transmission optimale du signal entre les polarisations basée sur la minimisation d'une fonction de coût par rapport à une qualité du signal reçu par le terminal de radiocommunication.

Le procédé selon l'invention repose sur l'observation qu'en général, indépendamment du phénomène de fading rapide, une polarisation est privilégiée par rapport à l'autre à un instant donné en termes de puissance du signal utile mesurée au récepteur. Il est dès lors judicieux de privilégier l'émission sur l'une des deux polarisations.

Cependant, la polarisation privilégiée évolue au cours du temps, par exemple à cause de la mobilité de l'une ou l'autre des deux stations ou à cause de la présence de réflecteurs, d'obstacles ou d'interféreurs mobiles. Dans le cas où l'une des stations est un terminal mobile de radiocommunication cellulaire, la puissance reçue est en moyenne identique sur les deux polarisations, alors qu'à une échelle de temps sur laquelle les déplacements du terminal ne sont pas trop importants (par exemple de quelques centaines de millisecondes à quelques secondes), l'une des polarisations peut se trouver privilégiée. Avec les vitesses de déplacement usuelles, cette échelle de temps est grande par rapport à celle des variations du phénomène de fading sur le canal de propagation.

Le réglage adaptatif des puissances d'émission appliqué dans le procédé selon l'invention permet avantageusement de suivre ces évolutions pour procurer des performances de réception améliorées.

L'invention tire ainsi avantageusement parti de l'absence de contrainte de rapidité pesant sur la fréquence de la boucle de rétroaction de certains schémas en boucle fermée. Elle permet en outre de fournir une amélioration peu coûteuse en termes de complexité au schéma de diversité en boucle ouverte STTD.

Un autre aspect de la présente invention se rapporte à une station de radiocommunication à diversité de polarisation, comprenant des moyens d'émission de plusieurs versions d'un signal radio ayant des polarisations différentes vers une station de radiocommunication distante. Cette station selon l'invention comprend en outre des moyens de mesure de paramètres à partir de signaux transmis par ladite station distante et des moyens de réglage adaptatif des puissances d'émission respectives desdites versions du signal radio en fonction desdits paramètres mesurés.

L'invention propose d'autre part un terminal de radiocommunication, comprenant des moyens pour communiquer avec une infrastructure de réseau incorporant une station de radiocommunication telle que définie ci-dessus, des moyens pour recevoir et traiter des signaux émis en diversité de polarisation selon n_pol polarisations par ladite station, des moyens pour mesurer, pour certains au moins des signaux émis par ladite station de radiocommunication selon une polarisation déterminée parmi n_pol, une contribution moyenne en puissance du bruit interférant le signal utile relatif audit signal émis, et des moyens pour transmettre lesdites mesures de contribution moyenne en puissance du bruit à l'infrastructure de réseau de radiocommunication.

L'invention propose d'autre part un système de radiocommunication comprenant: une infrastructure de réseau incorporant une station de radiocommunication et un terminal de radiocommunication. Le terminal de radiocommunication comprenant: des moyens pour communiquer avec l'infrastructure de réseau incorporant la station de radiocommunication; des moyens pour recevoir et traiter plusieurs versions d'un signal émis en diversité de polarisation selon n_pol polarisations par ladite station de radiocommunication; des moyens pour mesurer, pour certaines au moins des versions d'un signal émis par ladite station de radiocommunication selon une polarisation déterminée parmi n_pol, une contribution moyenne en puissance du bruit interférant un signal utile relatif audit signal émis; et des moyens pour transmettre ladite contribution moyenne en puissance du bruit, mesurée pour chaque polarisation déterminée parmi n_pol, à l'infrastructure de réseau de radiocommunication; ladite contribution moyenne en puissance du bruit, mesurée pour chaque polarisation déterminée parmi n_pol, étant utilisées par la station de radiocommunication pour commander de manière adaptative des puissances d'émission respectives desdites versions du signal pour obtenir une distribution de puissance de transmission optimale du signal entre les polarisations basée sur la minimisation d'une fonction de coût par rapport à une qualité du signal reçu par le terminal de radiocommunication.

D'autres particularités et avantages de la présente invention apparaîtront dans la description ci-après d'exemples de réalisation non limitatifs, en référence aux dessins annexés, dans lesquels :

la figure 1 est un schéma d'une station de radiocommunication et d'un terminal mobile illustrant un premier mode de réalisation de l'invention;

la figure 2 est un schéma synoptique d'une station de radiocommunication selon l'invention;

la figure 3 est un schéma synoptique d'un exemple de réalisation d'un émetteur-récepteur d'une station de radio-communication selon l'invention;

la figure 4 est un schéma d'un réseau UMTS;

la figure 5 est un schéma d'une station de radiocommunication et d'un terminal mobile illustrant un second mode de réalisation de l'invention.

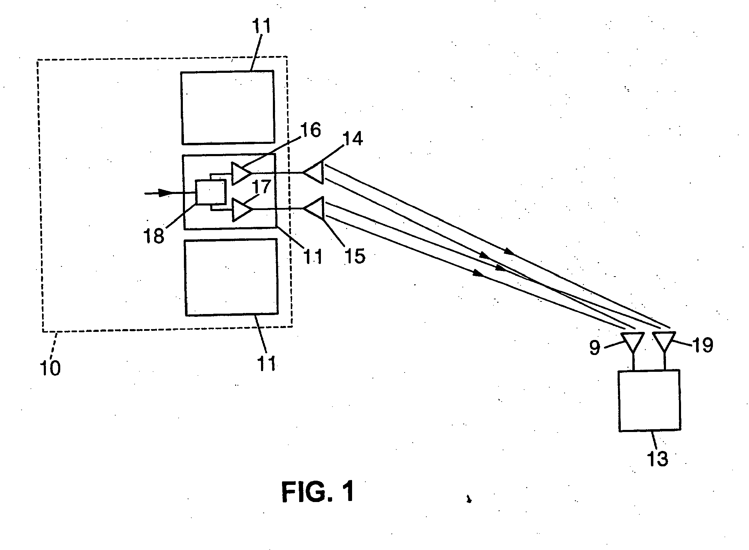

La figure 1 montre une station (10) d'un réseau de radiocommunication selon l'invention. La station (10) communique avec un contrôleur de réseau radio (non représenté sur la figure), et dessert une ou plusieurs cellules au moyen d'émetteurs-récepteurs respectifs (11). Une station (typiquement un terminal) mobile (13) est située sous la couverture d'un émetteur-récepteur (11). L'émetteur-récepteur (11) génère en émission des champs rayonnants avec n_pol (égal à 2 dans l'exemple de la figure 1) polarisations, à partir de n_pol antennes co-localisées. Dans l'exemple de la figure 1, il émet un signal radio à polarisation verticale sur une première antenne (14) et un signal radio à polarisation horizontale sur une seconde antenne (15). Conformément à la technique traditionnelle de diversité de polarisation, ces signaux radio à polarisations verticale et horizontale sont en fait deux versions d'un même signal. Chaque antenne (14)(15) est couplée à un amplificateur (16)(17), dont l'entrée est alimentée par l'une des deux sorties d'un coupleur de distribution (18). Selon un mode particulier de réalisation de l'invention, l'émission des deux versions de signal radio est simultanée, auquel cas les deux versions sont fournies à l'entrée du coupleur (18).

La station (13) est aussi munie de n_ant (égal à 2 dans l'exemple de la figure 1) antennes (9)(19), chacune sensibles en réception aux n_pol polarisations d'émission de la station (10) afin de fonctionner en mode de diversité de polarisation. De tels systèmes d'antenne peuvent par exemple être composés d'éléments dipôles croisés orientés selon un angle de $2\alpha$ entre eux pour permettre la réception de polarisations linéaires espacées angulairement de $2\alpha$. Dans l'exemple de la figure 1, la station (13) émet aussi des signaux selon deux polarisations espacées de $2\alpha$ (avec typiquement $2\alpha = 90°$).

On considère donc le cas d'une diversité d'émission d'ordre n_div = n_ant x n_pol (égal à 4 dans l'exemple de la figure 1), et la réception par une station (13) de radiocommunication d'une séquence de symboles (seq), émise à partir de l'émetteur-récepteur (11) fonctionnant en mode de diversité de polarisation. Chaque antenne (14)(15) rayonne donc un champ dans une polarisation $(pol\_i)_{1\leq i\leq pol}$ qui transporte la séquence émise $(seq^{pol\_i})_{1\leq i\leq n\_pol}$. On cherche alors à déterminer un vecteur dont les composantes sont les puissances, $(p_{e,BS}^{pol\_i})_{1\leq i\leq n\_pol}$ de chaque séquence $(seq^{pol\_i})_{1\leq i\leq n\_pol}$ transmise avec une polarisation donnée $(pol\_i)_{1\leq i\leq n\_pol}$, et ce afin de répartir de manière optimale la puissance entre les différentes polarisations d'émission à partir de l'émetteur-récepteur (11). La somme des puissances $(p_{e,BS}^{pol\_i})_{1\leq i\leq n\_pol}$ est majorée par la puissance totale P disponible en émission. Le vecteur optimal de répartition des puissances est estimé en minimisant une fonction de coût relative à la qualité du signal utile reçu par la station de réception (13), qui peut être la probabilité d'erreur binaire moyenne sur les bits.

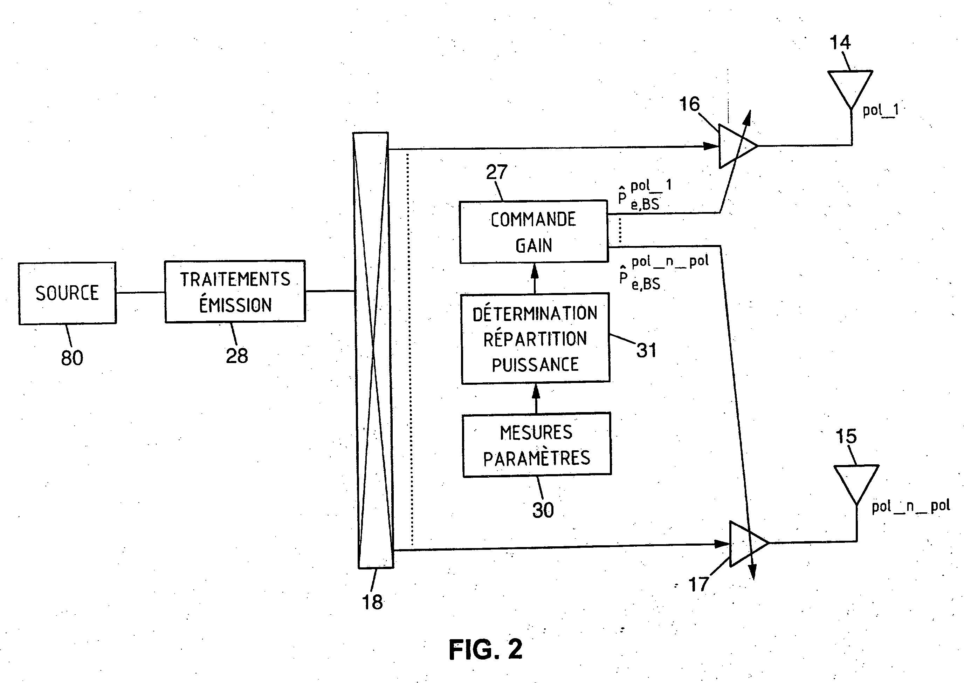

La figure 2 montre l'unité d'émission d'un émetteur-récepteur (11) d'une station (10) de radiocommunication selon l'invention. Chacune des n_pol antennes (14)(15) est agencée pour rayonner un champ avec une des n_pol polarisations d'émission de la station; et est couplée avec un amplificateur (16)(17), dont l'entrée est alimentée par l'une des sorties du coupleur (18). Les données à émettre, issues d'une source (80), sont traitées en vue de l'émission par le module (28) qui effectue les traitements de modulation, et dont la sortie est reliée au coupleur (18) pour être distribuée sur les n_pol polarisations en émission. Les puissances d'émission délivrées par les amplificateurs de puissance (16)(17) sont chacune contrôlées par le module de commande (27) de manière à répartir la puissance d'émission sur les n_pol branches d'émission selon la répartition optimale estimée par le module (31). Dans la suite, on s'attachera à des exemples de réalisation de l'invention dans lesquels on mesure des paramètres d'émission et de réception de signaux en vue de déterminer la répartition optimale des puissances. Ces mesures sont fournies par le module (30) dans l'exemple de la figure 2.

Revenant à la figure 1, la portion de signal utile reçu par la station de réception (13) sur chaque antenne (9)(19) ant_j est constituée des contributions de chaque séquence transmise $(seq^{pol\_i})_{1 \leq i \leq n\_pol}$, notée $(seq^{pol\_i, ant\_j})_{1 \leq i \leq n\_pol, 1 \leq j \leq n\_ant}$. Chaque antenne (9)(19) est couplée à un récepteur en diversité qui effectue des traitements radio (amplification, transposition en fréquence, filtrage et numérisation) et de démodulation pour fournir des estimations des séquences transmises, qui sont combinées pour fournir un gain de diversité. La combinaison peut notamment être une combinaison optimale de type MRC, qui pondère les différentes estimations en fonction des amplitudes complexes observées pour les différents trajets. Les séquences issues de chaque récepteur peuvent à leur tour être combinées selon la méthode MRC.

L'invention sera décrite dans la suite dans le cas de liaisons entre les stations (10) et (13) utilisant une modulation différentielle par déplacement de phase (DPSK, « Differential Phase Shift Keying »). La probabilité d'erreur moyenne sur les bits après combinaison MRC s'écrit :

$$BER_{MRC} = \frac{1}{2} \cdot \prod_{k=1}^{n\_div} \left( \frac{1}{1 + \gamma_k} \right) \qquad (1)$$

où $(\gamma_k)_{1 \leq k \leq n\text{-div}}$ désigne le rapport signal à bruit moyen mesuré sur les portions de signal utile reçues sur une antenne $(ant\_j)_{1 \leq j \leq n\_ant}$ selon la polarisation $(pol\_i)_{1 \leq i \leq n\_pol}$ en présence d'évanouissements rapides possédant une densité de probabilité de Rayleigh.

L'invention vise à déterminer une distribution des puissances d'émission selon chaque polarisation au niveau de la station (10). Pour une diversité duale de polarisation, les puissances reçues par la station (13) sur chaque antenne peuvent être exprimées au moyen de l'équation matricielle suivante :

$$\begin{pmatrix} p_{r,MS}^{ant\_1} \\ p_{r,MS}^{ant\_2} \end{pmatrix} = \begin{pmatrix} b_1 & b_2 \\ b_3 & b_4 \end{pmatrix} \begin{pmatrix} p_{e,BS}^{pol\_1} \\ p_{e,BS}^{pol\_2} \end{pmatrix} \qquad (2)$$

Les coefficients $(b_k)_{1 \leq k \leq n\_div}$ sont des coefficients de transfert de puissance représentant une moyenne sur un intervalle de temps suffisamment long pour lisser les variations du canal dues au fading de Rayleigh, mais suffisamment court pour conserver une certaine différenciation des polarisations compte tenu de la mobilité de la station (13) par rapport aux antennes (14) et (15) de l'émetteur-récepteur (11). Cet intervalle de temps sera typiquement de l'ordre de 10 ms à quelques secondes. Les quantités $\left( p_r^{ant\_j} \right)_{1 \leq j \leq n\_ant}$ et $\left( p_e^{pol\_i} \right)_{1 \leq i \leq n\_pol}$ représentent donc des contributions moyennes en puissance sur chaque polarisation pol_i en émission, ou antenne en réception ant_j, respectivement, mesurées sur un intervalle de temps de l'ordre de 10 ms à quelques secondes. Dans le sens inverse, si l'on suppose que chacune des antennes (14)(15) est aussi sensible en réception aux n_pol polarisations, les puissances reçues par la station de base (11) sur chaque polarisation peuvent être exprimées au moyen de l'équation matricielle suivante :

$$\begin{pmatrix} p_{r,BS}^{ant\_1} \\ p_{r,BS}^{ant\_2} \end{pmatrix} = \begin{pmatrix} b'_1 & b'_2 \\ b'_3 & b'_4 \end{pmatrix} \begin{pmatrix} p_{e,MS}^{pol\_1} \\ p_{e,MS}^{pol\_2} \end{pmatrix} \qquad (3)$$

En travaillant avec des quantités moyennes mesurées sur un tel intervalle de temps, le théorème de réciprocité permet de considérer que les matrices de transfert de puissance dans le sens descendant et dans le sens montant sont quasi-identiques, de sorte que l'on peut faire l'approximation : $b'_k = b_k$, $\forall$ $1 \leq k \leq$ n_div. Cet intervalle de moyennage permet en effet d'ignorer pour le besoin des calculs les phénomènes d'évanouissement rapides, les coefficients de la matrice de transfert de puissance reflétant les variations lentes de l'atténuation observées sur le canal de propagation.

Dans le cas présent de réalisation de l'invention, les quantités $(\gamma_k)_{1 \leq k \leq \text{n\_div}}$ s'écrivent

$$\gamma_k = \frac{puis_r^{(pol\_i,ant\_j)}}{N_r^{(pol\_i,ant\_j)}}$$ pour $1 \leq i \leq$ n_pol $1 \leq j \leq$ n_ant où $puis_r^{(pol\_i,ant\_j)}$ désigne la contribution en puissance moyenne reçue, sur l'antenne ant_j du signal utile émis avec la polarisation pol_i et $N_r^{pol\_i,ant\_j}$ désigne la contribution en puissance moyenne reçue sur l'antenne ant_j du bruit correspondant. La matrice de transfert de puissance permet ensuite d'écrire $\gamma_k = \dfrac{b_k \cdot p_e^{pol\_i}}{N_r^{pol\_i,ant\_j}}$ . La minimisation de la fonction de coût BE-R$_{MRC}$ (1) conduit alors à la recherche des racines positives d'un polynôme en $p_e^{pol\_1}$ de degré 3, qui permet d'obtenir l'expression des puissances optimales pour chaque polarisation émise, par exemple dans le sens descendant. Ces valeurs optimales de puissances sont transmises au module (27) de commande, afin d'être prises en compte dans la commande des moyens (16)(17) d'amplification de l'émetteur-récepteur (11).

La complexité de la détermination du vecteur optimal de distribution des puissances peut être avantageusement amoindrie en tirant parti du caractère associatif des opérations de combinaison optimale MRC. La minimisation de la fonction de coût en sortie des modules de combinaison optimale conduit à travailler sur un ordre de diversité n_div/n_pol.

Dans ce cas de figure, les quantités $(\gamma_k)_{1 \leq k \leq \text{n\_div}}$ deviennent $(\gamma_{ant\_j})_{1 \leq j \leq \text{n\_ant}}$ et s'écrivent $\gamma_{ant\_j} = \dfrac{puis_r^{ant\_j}}{N_r^{ant\_j}}$ pour 1

$\leq i \leq$ n ant où $puis_r^{ant-j}$ désigne la contribution en puissance moyenne reçue du signal utile sur l'antenne ant_j, et

$N_r^{ant-j}$ désigne la contribution en puissance moyenne reçue du bruit correspondant.

L'équation matricielle (2) conduit à :

$$\gamma_{ant\_1} = \frac{p_e^{pol-1} \times b_1 + \left(P - p_e^{pol-1}\right) \times b_2}{N_r^{ant-1}} \qquad (4)$$

et

$$\gamma_{ant\_2} = \frac{p_e^{pol-2} \times b_3 + \left(P - p_e^{pol-2}\right) \times b_4}{N_r^{ant-2}} \qquad (5)$$

Il en découle, par dérivation de la fonction de coût BER$_{MRC}$ (1), l'expression des puissances optimales pour chaque polarisation émise, par exemple dans le sens descendant:

$$\hat{p}_{e,BS}^{pol-1} = \frac{\left(N_{r,MS}^{ant-1} + b_2 \cdot P\right) \times \left(b_4 - b_3\right) + \left(N_{r,MS}^{ant-2} + b_4 \cdot P\right) \times \left(b_2 - b_1\right)}{2 \cdot \left(b_1 - b_2\right) \cdot \left(b_3 - b_4\right)} \qquad (6)$$

et

$$\hat{p}^{pol\_2}_{e,BS} = P - \hat{p}^{pol\_1}_{e,BS} \qquad\qquad (7)$$

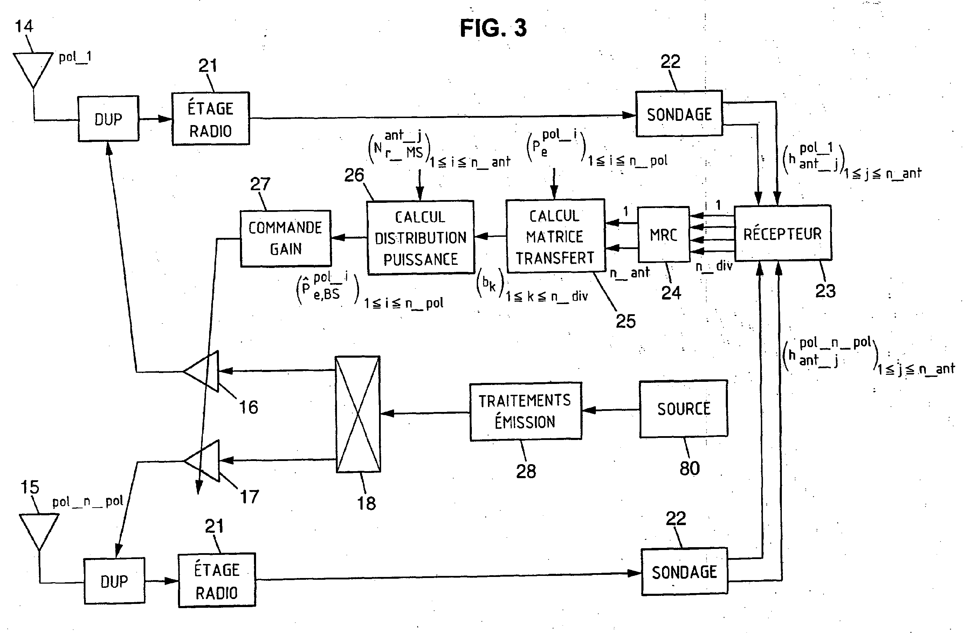

Ce mode de réalisation de l'invention est décrit ci-après dans un exemple d'application à un réseau de radio-communication utilisant la technique d'accès partagé CDMA ("Code Division Multiple Access"). La figure 3 illustre la partie réception d'un émetteur-récepteur (11) d'une station (10) de radiocommunication opérant en mode de diversité de polarisation selon l'invention. La station dispose de n_pol = 2 antennes de réception, chacune des antennes (14)(15) étant sensible à chaque polarisation $(pol\_i)_{1\leq i\leq n\_pol}$. Un étage radio (21), disposé en aval de chaque antenne (14)(15), assure les traitements d'amplification, de transposition en fréquence, de filtrage et de numérisation pour former un signal en bande de base à partir du signal radio capté par l'antenne (14)(15).

Dans un système CDMA à étalement de spectre, les séquences de symboles transmis (seq), généralement binaires ($\pm$ 1) ou quaternaires ($\pm 1 \pm j$), sont multipliées par des codes d'étalement composés d'échantillons, appelés "chips", dont la cadence est supérieure à celle des symboles, dans un rapport appelé facteur d'étalement, noté SF ("Spreading Factor"). Des codes d'étalement orthogonaux ou quasi-orthogonaux sont alloués à différents canaux partageant la même fréquence porteuse, afin de permettre à chaque récepteur de détecter la séquence de symboles qui lui est destinée, en multipliant le signal reçu par le code d'étalement correspondant.

Chaque antenne (14)(15) est couplée en réception à un récepteur traditionnel qui effectue une démodulation cohérente fondée sur une approximation de la réponse impulsionnelle du canal de propagation radio. Pour estimer une réponse impulsionnelle, un module de sondage (22) comporte, de façon classique, un filtre adapté au code d'étalement du canal ou à la séquence de symboles pilotes transmise considérée. Pendant la réception d'un symbole pilote, connu a priori de la station de base (11), la sortie de ce filtre adapté est multipliée par le complexe conjugué de ce symbole pilote, ce qui produit une observation de la réponse impulsionnelle. L'estimation est obtenue en moyennant ces observations sur quelques dizaines de symboles pilotes.

La station (10) reçoit des séquences pilotes $\left(seq\_pil^{pol\_i}_{ant\_j}\right)_{1\leq i\leq n\_pol, 1\leq j\leq n\_ant}$ correspondant à des séquences émises $(seq\_pil_{ant\_j})_{1\leq j\leq n\_ant}$ par la station (13), constituées de séquences de symboles pilotes $(seq\_pil\_symb_{ant\_j})_{1\leq j\leq n\_ant}$ multipliées par le code d'étalement du canal. Ceci permet à chaque module (22) d'estimer séparément chaque vecteur de réponse impulsionnelle $(h_k)_{0\leq k\leq n\_div}$ dont les composantes caractérisent le canal de propagation d'un signal émis sur une parmi les n_ant d'émission de la station (13). Ce traitement est effectué pour chacune des n_pol branches du récepteur en diversité de la station (10), de sorte que dans l'exemple de réalisation de l'invention, les n_pol modules (22) réalisent n_div estimations de réponse impulsionnelle $(h^{pol\_i}_{ant\_j})_{1\leq i\leq n\_pol, 1\leq j\leq n\_ant}$. A partir de ces n_div réponses impulsionnelles estimées, un module (23) effectue une démodulation cohérente et un décodage des n_pol signaux reçus sur chaque antenne. La démodulation par exemple être effectuée au moyen d'un récepteur de type RAKE. Les estimations des symboles transmis ainsi obtenues sont ensuite combinées au sein du module (24) pour obtenir un gain en diversité. Le module (24) produit n_pol séquences de symboles estimés, chacune correspondant à la combinaison des signaux reçus selon l'une parmi les n_pol polarisations d'émission de la station (10).

Le module (25) détermine des coefficients de transfert de puissance $(b_k)_{1\leq k\leq n\_div}$, à partir de l'estimation de canal ou des signaux démodulés (estimation des bits) dont il mesure la contribution moyenne en puissance $\left(p^{pol\_i}_r\right)_{1\leq i\leq n\_pol}$, et des contributions moyennes en puissance de la station (13) $\left(p^{pol\_i}_e\right)_{1\leq i\leq n\_pol}$. Le module (26) détermine ensuite un vecteur optimal de puissances $(\hat{p}^{pol\_i}_{e,BS})_{1\leq i\leq n\_pol}$ dont il transmet les composantes correspondant à chaque polarisation au module de commande (27) qui commande en émission les amplificateurs de puissance (16)(17).

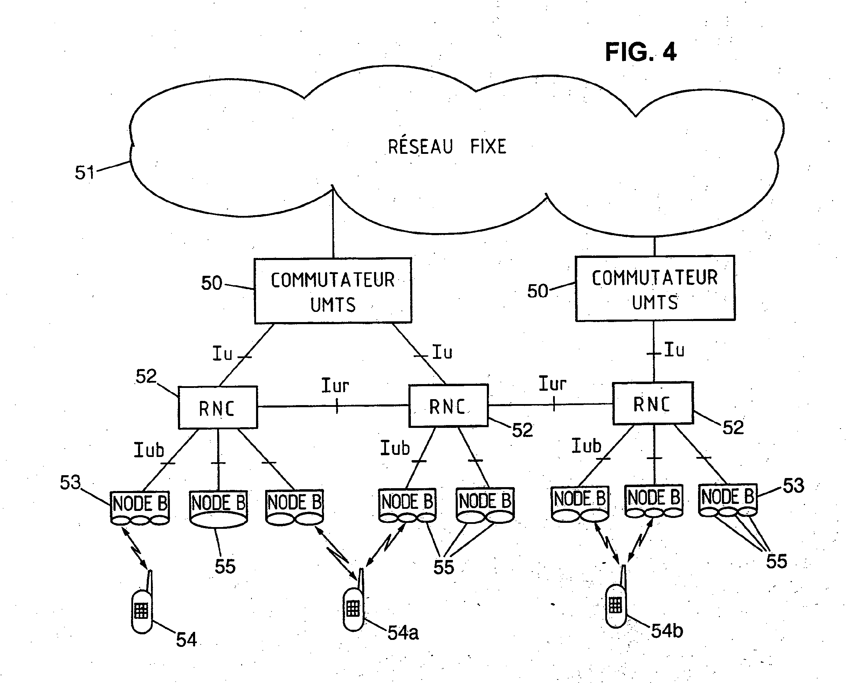

Ces traitements supposent que la station (11) dispose des contributions moyennes en puissance de la station (13) $\left(p^{pol\_i}_e\right)_{1\leq i\leq n\_pol}$ et des contributions moyennes en puissance du bruit en réception de la station (13) $(N^{pol\_i}_{r,MS})_{1\leq i\leq n\_pol}$. Ces données peuvent être fournies à la station (11) au moyen d'une boucle de rétroaction dont un exemple est fourni ci-après dans le cadre des réseaux de troisième génération de type UMTS, dont la figure 4 montre l'architecture.

Les commutateurs du service mobile 50, appartenant à un coeur de réseau (CN, « Core Network »), sont reliés d'une part à un ou plusieurs réseaux fixes 51 et d'autre part, au moyen d'une interface dite *Iu*, à des équipements de contrôle 52, ou RNC (« Radio Network Controller »). Chaque RNC 52 est relié à une ou plusieurs stations de base 53 au moyen d'une interface dite *Iub*. Les stations de base 53, réparties sur le territoire de couverture du réseau, sont capables de communiquer par radio avec les terminaux mobiles 54, 54a, 54b appelés UE (« User Equipment »). Les stations de base 53, aussi appelées « node B », peuvent desservir chacune une ou plusieurs cellules au moyen d'émetteurs-récepteurs respectifs 55. Certains RNC 52 peuvent en outre communiquer entre eux au moyen d'une interface dite *Iur*. Les RNC et les stations de base forment un réseau d'accès appelé UTRAN (« UMTS Terrestrial Radio Access Network »).

Les réseaux UMTS utilisent une technique à large bande d'accès multiple avec répartition par codes (W-CDMA, « Wideband CDMA »). La cadence chip est de 3,84 Mchip/s dans le cas de l'UMTS. Les codes d'étalement distinguent différents canaux physiques qui sont superposés sur la même ressource de transmission constituée par une fréquence porteuse. Pour l'UMTS en mode FDD (« Frequency Division Duplex ») sur la liaison descendante, un code de brouillage (« scrambling code ») est alloué à chaque émetteur-récepteur correspondant à une cellule desservie par une station de base, et différents canaux physiques dans cette cellule sont distingués par des codes de canal (« channelization codes ») mutuellement orthogonaux. L'émetteur-récepteur peut aussi utiliser plusieurs codes de brouillage mutuellement orthogonaux, l'un d'entre eux étant un code de brouillage primaire. Sur la liaison montante, l'émetteur-récepteur utilise le code de brouillage pour séparer les terminaux mobiles émetteurs, et éventuellement le code de canal pour séparer les canaux physiques issus d'un même terminal. Pour chaque canal physique, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le canal.

Dans un mode préféré de réalisation de l'invention, les signaux émis par le terminal sur chacune des polarisations le sont avec la même puissance. La puissance d'émission d'un terminal mobile peut être connue de la station de base par l'intermédiaire des procédures de mesures demandées par le RNC aux UE, pour être ensuite transmise aux stations de base sur l'interface Iub.

Les procédures de mesure sont notamment décrites dans la section 8.4 de la spécification technique 3G TS 25.331, "Radio Ressource Control (RRC) Protocol Spécification", version 3.9.0 publiée en décembre 2001 par le 3GPP, et dans la spécification technique 3G TS 25.215, "Physical Layer; Measurements (FDD)", version 3.9.0 publiée en décembre 2001 par le 3GPP. Les mesures souhaitées par le RNC sont demandées aux UE dans des messages « MEASUREMENT CONTROL », dans lesquels sont également indiqués les modes de compte rendu, par exemple avec une périodicité spécifiée ou en réponse à certains événements. Les mesures spécifiées par le RNC sont alors effectuées par l'UE qui les remonte sur la connexion RRC dans des messages « MEASUREMENT REPORT» (voir sections 10.2.15 et 10.2.17 de la spécification technique 3G TS 25.331). Ces messages « MEASUREMENT CONTROL » et « MEASUREMENT REPORT» sont relayés de façon transparente par les émetteurs-récepteurs 55 des stations de base. Les mesures prises en considération par le RNC pour contrôler les liens radio comprennent des mesures de puissance (type de mesure "UE transmitted power" décrite au paragraphe 5.1.7 de la spécification technique 25.215, version 3.9.0) effectuées sur les signaux ou canaux pilotes, obtenues par un module de mesure situé dans l'UE. Les mesures obtenues par ce module de mesure sont transmises au RNC par l'intermédiaire d'un protocole de contrôle des ressources radio (RRC), appartenant à la couche 3 du modèle ISO, décrit dans la spécification technique 3G TS 25.331. Ces mesures de puissance peuvent ensuite être retransmises à la station de base, par exemple au moyen du protocole applicatif de commande des émetteurs-récepteurs, appelé NBAP ("Node B Application Protocol", voir spécification technique 3G TS 25.433, version 3.9.0 publiée en mars 2002 par le 3GPP).

Dans la suite, on considère que les contributions moyennes en puissance du bruit en réception de la station (13) $\left(N_{r,MS}^{pol\_i}\right)_{1\leq i\leq n\_pol}$ sont identiques sur les différentes polarisations, et notées $N_{r,MS}$. Cette contribution peut être exprimée comme suit : $N_{r,MS} = RSSI_{MS} - \dfrac{p_{e,BS}}{\text{"pathloss"}}$ où la quantité RSSI (« Received Signal Strength Indicator ») désigne la puissance reçue dans la bande passante des signaux autour d'une porteuse UMTS. Cette puissance peut être mesurée par le récepteur radio de la station (13). Dans un système UMTS, l'UE peut aussi calculer l'atténuation du signal ("pathloss") sur le canal de propagation depuis chaque node B d'un ensemble surveillé pour la mise en oeuvre du mode de macrodiversité. La norme prévoit que le RNC puisse demander à l'UE qu'il lui rende compte de ce paramètre d'atténuation (3G TS 25.331, sections 10.3.7.38 et 14.1.1) et de cette puissance reçue (3G TS 25.331, sections 10.3.7.15 et 10.3.7.21). De même que précédemment, ces mesures peuvent ensuite être retransmises à la station de base, par exemple au moyen du protocole NBAP (voir spécification technique 3G TS 25.433 précitée).

L'orthogonalité des séquences pilotes $(seq\_pil_{ant\_j})_{1 \leq j \leq n\_ant}$ peut être assurée selon deux modes de fonctionnement détaillés ci-après.

Le premier mode de fonctionnement est caractérisé par la détermination du ou des canaux physiques à utiliser pour la communication entre la station (13) et l'émetteur-récepteur (11), ainsi que de leur format, un canal de communication ayant des caractéristiques propres selon son format. Les différents formats existants sont rassemblés dans le tableau 11 de la section 5.3.2 de la spécification technique 3G TS 25.211, "Physical channels and mapping of transport channels onto physical channels (FDD)", version 3.9.0 publiée en décembre 2001 par le 3GPP. Une des caractéristiques importantes d'un canal de communication est son facteur d'étalement SF. Plus le SF d'un canal est élevé, plus le débit qu'il offre sera faible. Mais parallèlement, plus le SF d'un canal est élevé, plus la durée d'un symbole est grande, permettant ainsi une meilleure robustesse aux interférences. Dans le système UMTS illustré à la figure 4, le RNC 52 peut décider de modifier les canaux de communication courants pour les remplacer par un ou plusieurs canaux de communication de SF différent. Un traitement similaire peut d'ailleurs être effectué, non pas en cours de communication, mais à l'initialisation de celle-ci, lors de l'allocation de ressources radio.

Pour illustrer ce principe général, considérons un canal de communication de SF 8 utilisé à un moment donné entre un terminal mobile 54 et un émetteur récepteur fixe 55. Celui-ci est par exemple un canal de format n° 15 selon la codification de la spécification technique 3G TS 25.211. Le RNC peut choisir d'utiliser, en remplacement de ce canal de communication, deux autres canaux de SF 16, par exemple de format n° 14. Le terminal mobile 54 fonctionne alors en mode de transmission multicode. La communication est alors également répartie entre les deux canaux. Le débit résultant est légèrement plus faible avec les deux canaux de SF 16, ce qui n'empêchera toutefois pas d'offrir le service requis.

Lorsque le mobile transmet en multicode des signaux à diversité de polarisation, l'allocation en transmission de chaque canal de communication peut être effectuée de manière à transmettre avec un code de canal donné sur une polarisation. Dans l'exemple précédent, chaque canal de SF16 peut être transmis sur une antenne du terminal mobile, chaque antenne générant des signaux radio électriques de polarisation $(pol\_i)_{1 \leq i \leq n\_pol}$. Cela permet d'associer un code de canal avec une polarisation, ce qui assure l'orthogonalité des séquences $(seq\_pil_{ant\_j})_{1 \leq j \leq n\_ant}$ émises sur chaque antenne.

Dans le système UMTS, le fonctionnement en mode multicode d'un mobile est contrôlé par le RNC correspondant. La transmission par le RNC des canaux à utiliser par le terminal mobile se fait selon le protocote RRC, tel que présenté dans la spécification technique 3G TS 25.331 précitée, grâce à un message de commande d'initialisation ou de reconfiguration de canaux : "Radio bearer setup", "Radio bearer reconfiguration" ou "Physical channel reconfiguration". Chacun de ces messages contient un élément d'information nommé "Downlink information for each radio link" (voir paragraphe 10.3.6.27 de la 3G TS 25.331). Ce message contient lui-même un élément d'information nommé "Downlink DPCH info for each RL" (voir paragraphe 10.3.6.21 de la 3G TS 25.331). Ce dernier message contient un certain nombre d'informations permettant de caractériser les canaux à utiliser. Parmi ces informations, on trouve les codes de canal descendant, les facteurs d'étalement et les codes de brouillage associés. A la réception de ce message, le terminal mobile est capable d'utiliser le ou les canaux identifiés et transmis par le RNC.

Dans un autre mode de fonctionnement, l'orthogonalité des séquences pilotes émises $(seq\_pil_{ant\_j})_{1 \leq j \leq n\_ant}$ est assurée par l'orthogonalité des séquences de symboles pilotes considérées $(seq\_pil\_symb_{ant\_j})_{1 \leq j \leq n\_ant}$.

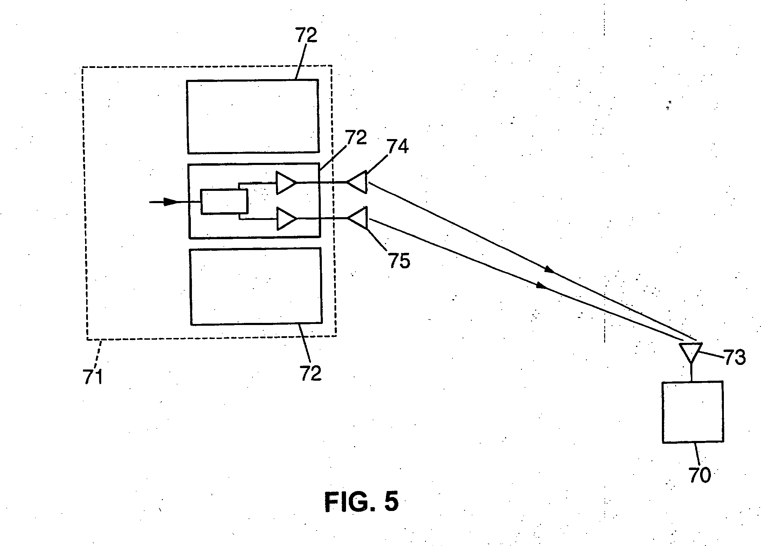

Dans un second mode de réalisation illustré par la figure 5, la station mobile (70) est équipée de n_ant = 1 antenne dipolaire (73). Compte tenu des rotations de polarité intervenant le long des trajets de propagation entre l'émetteur et le récepteur, cette antenne (73) est sensible en réception à chacune des n_pol polarisations d'émission de la station fixe (71). L'ordre de diversité est alors égal à n_pol (égal à 2 dans l'exemple de la figure 5).

Dans le cas de liaisons entre les stations (70) et (71) utilisant une modulation DPSK, la probabilité d'erreur moyenne sur les bits après combinaison MRC s'écrit:

$$BER_{MRC} = \frac{1}{2} \cdot \prod_{i=1}^{n\_pol} \left( \frac{1}{1 + \gamma_i} \right) \qquad\qquad (8)$$

où $(\gamma_i)_{1 \leq i \leq n\_pol}$ désigne le rapport signal à bruit moyen mesuré sur les portions de signal utile reçues par la station (70) selon la polarisation $(pol\_i)_{1 \leq i \leq n\_pol}$ en présence d'évanouissements rapides possédant une densité de probabilité de Rayleigh.

On cherche à minimiser $BER_{MRC}$ (8) sous la contraint :

$$\sum_{i=1}^{n\_pol} p_{e,BS}^{pol\_i} = P \qquad (9)$$

Les quantités $(\gamma_i)_{1 \le i \le n\_pol}$ s'écrivent : $\gamma_i = \dfrac{puis_r^{pol\_i}}{N_r^{pol\_i}}$ pour $1 \le i \le n\_pol$ où $puis_r^{pol\_i}$ désigne la contribution en puissance moyenne reçue par la station (70) du signal utile émis avec la polarisation pol_i, et $N_r^{pol\_i}$ désigne la contribution en puissance moyenne reçue du bruit. En notant, $(b_i)_{1 \le i \le n\_pol}$ le coefficient d'atténuation subi par le signal utile émis avec la polarisation pol_i, il vient : $\gamma_i = \dfrac{b_i \cdot p_e^{pol\_i}}{N_r^{pol\_i}}$. Des techniques classiques d'optimisation sous contrainte (comme par exemple les coefficients multiplicateurs de Lagrange) conduisent à l'optimum :

$$\hat{p}_{e,BS}^{pol\_i} = \frac{P}{n\_pol} + \frac{1}{n\_pol} \sum_{l=1}^{n\_pol} \frac{N_r^{pol\_i}}{b_l} - \frac{N_r^{pol\_i}}{b_i} \qquad (10)$$

En supposant que la contribution en puissance moyenne reçue du bruit est identique sur chaque polarisation, et est notée Nr, on obtient :

$$\hat{p}_{e,BS}^{pol\_i} = \frac{P}{n\_pol} + \frac{N_r}{n\_pol} \sum_{l=1}^{n\_pol} \frac{1}{b_l} - \frac{N_r}{b_i} \qquad (11)$$

soit pour une diversité de polarisation d'ordre 2, comme illustré sur la figure 5 :

$$\hat{p}_{e,BS}^{pol\_1} = \frac{P}{2} + \frac{N_r}{2}\left(\frac{1}{b_2} - \frac{1}{b_1}\right) \qquad (12)$$

et

$$\hat{p}_{e,BS}^{pol\_2} = \frac{P}{2} + \frac{N_r}{2}\left(\frac{1}{b_1} - \frac{1}{b_2}\right) \qquad (13)$$

De même que précédemment, l'application du théorème de réciprocité permet d'obtenir les coefficients $(b_i)_{1 \le i \le n\_pol}$ à partir d'une mesure des atténuations dans le sens montant, de la station (70) vers la station (71). Le couplage de chaque antenne (74)(75) de l'émetteur-récepteur (72) à un récepteur traditionnel permet de mettre en oeuvre l'exemple précédent de procédé d'obtention des coefficients $(b_i)_{1 \le i \le n\_pol}$.

La puissance d'émission de la station (71) sur chaque antenne (74)(75) correspondant à une-polarisation donnée est donc ajustée de manière à privilégier le meilleur trajet du signal émis. Ce procédé peut avantageusement être combiné avec d'autres schémas de diversité d'émission, prévus par exemple pour des réseaux de type GSM ("Global System for Mobile Telecommunications"), ou pour des réseaux de type UMTS, comme le schéma STTD évoqué plus haut. Dans ce cas de figure, les deux versions du signal radio sont émises selon le schéma d'émission STTD. Leur émission n'est de ce fait pas simultanée.

**Revendications**

1. Un système de radiocommunication comprenant:

une infrastructure de réseau incorporant une station de radiocommunication (10); et un terminal de radiocommunication (13), comprenant:

des moyens pour communiquer avec l'infrastructure de réseau incorporant la station de radiocommunication, et

des moyens pour recevoir et traiter plusieurs versions d'un signal émis en diversité de polarisation selon n_pol polarisations par ladite station de radiocommunication,

des moyens pour mesurer, pour certaines au moins des versions d'un signal émis par ladite station de radiocommunication selon une polarisation déterminée parmi n_pol, une contribution moyenne en puissance du bruit interférant un signal utile relatif audit signal émis, et

des moyens pour transmettre ladite contribution moyenne en puissance du bruit, mesurée pour chaque polarisation déterminée parmi n_pol, à l'infrastructure de réseau de radiocommunication;

ladite contribution moyenne en puissance du bruit, mesurée pour chaque polarisation déterminée parmi n_pol, étant utilisée par la station de radiocommunication pour commander de manière adaptative des puissances d'émission respectives desdites versions du signal pour obtenir une distribution de puissance de transmission optimale du signal entre les polarisations basée sur la minimisation d'une fonction de coût par rapport à une qualité du signal reçu par le terminal de radiocommunication.

2. Le système selon la revendication 1, dans lequel le terminal de radiocommunication comprend des moyens pour recevoir et traiter plusieurs versions d'un signal émis en diversité de polarisation selon n_pol polarisations sur n_ant antennes, n_ant étant supérieur ou égal à 2, des moyens pour évaluer, pour chacune des n_pol polarisations, des coefficients de transfert de puissance sur un canal de propagation radio de certaines au moins des versions d'un signal émis par ladite station de radiocommunication, et des moyens pour transmettre les coefficients évalués à l'infrastructure de réseau de radiocommunication.

3. Le système selon la revendication 1, dans lequel le terminal de radiocommunication comprend en outre des moyens d'émission de plusieurs versions d'un signal radio selon lesdites n_pol polarisations à partir de n_ant antennes d'émission, et ladite station de radiocommunication comprend en outre des moyens pour mesurer, pour chacune des n_pol polarisations en émission, une contribution moyenne en puissance de certaines au moins des versions dudit signal radio émis par lesdits moyens d'émission, et des moyens pour transmettre la contribution moyenne en puissance pour chacune des n_pol polarisations en émission à l'infrastructure de réseau.

4. Le système selon la revendication 1, dans lequel le terminal de radiocommunication comprend en outre des moyens d'émission avec une contribution moyenne en puissance sensiblement identique des signaux radio selon lesdites n_pol polarisations à partir de n_ant antennes d'émission, et ladite station de radiocommunication comprend en outre des moyens pour mesurer une contribution moyenne en puissance de certains au moins des signaux radio émis par lesdits moyens d'émission, et des moyens pour transmettre la contribution moyenne en puissance pour chacune des n_pol polarisations en émission à l'infrastructure de réseau.

5. Le système selon l'une quelconque des revendications 1 à 4, dans lequel n_pol = 2.

6. Le système selon l'une quelconque des revendications 2 à 5, dans lequel n_ant = 2.

7. Procédé de radiocommunication entre un terminal de radiocommunication (13) et une infrastructure de réseau incorporant une station de radiocommunication (10), comprenant les étapes suivantes:

- de réception et de traitement par le terminal de radiocommunication de plusieurs versions d'un signal émis en diversité de polarisation selon n_pol polarisations par ladite station de radiocommunication,

- de mesure par ledit terminal de radiocommunication, pour certaines au moins des versions d'un signal émis par ladite station de radiocommunication selon une polarisation déterminée parmi n_pol, une contribution moyenne en puissance du bruit interférant un signal utile relatif audit signal émis,

- de transmission par ledit terminal de radiocommunication de ladite contribution moyenne en puissance du bruit, mesurée pour chaque polarisation déterminée parmi n_pol, à l'infrastructure de réseau de radiocommunication,

- de mesure de paramètres dans l'infrastructure de réseau à partir de signaux transmis par le terminal de radiocommunication,
- d'estimation dans l'infrastructure de réseau d'une répartition optimale d'une puissance entre les polarisations d'émission, et
- de réglage adaptatif des puissances d'émission respectives desdites versions du signal en fonction desdits paramètres mesurés pour obtenir la répartition optimale de la puissance d'émission entre les polarisations,
- ladite contribution moyenne en puissance du bruit, mesurée pour chaque polarisation déterminée parmi n_pol, étant utilisée par la station de radiocommunication pour commander de manière adaptative des puissances d'émission respectives desdites versions du signal pour obtenir une distribution de puissance de transmission optimale du signal entre les polarisations basée sur la minimisation d'une fonction de coût par rapport à une qualité du signal reçu par le terminal de radiocommunication.

8. Procédé selon la revendication 7, qui comprend en plus :

- une réception et un traitement par ledit terminal de radiocommunication de plusieurs versions d'un signal émis en diversité de polarisation selon n_pol polarisations sur n-ant antennes, n_ant étant supérieur ou égal à 2,
- une évaluation par ledit terminal de radiocommunication, pour chacune des n_pol polarisations, des coefficients de transfert de puissance sur un canal de propagation radio de certaines au moins des versions d'un signal émis par ladite station de radiocommunication, et
- la transmission par ledit terminal de radiocommunication desdits coefficients évalués à l'infrastructure de réseau.

9. Procédé selon la revendication 7, qui comprend en outre :

- une émission par ledit terminal de radiocommunication des versions d'un signal radio selon lesdites n_pol polarisations à partir de n_ant antennes d'émission,
- une mesure par ladite station de radiocommunication, pour chacune des n_pol polarisations en émission, d'une contribution moyenne en puissance de certaines au moins des versions dudit signal radio émis, et
- une transmission par ladite station de radiocommunication de la contribution moyenne en puissance pour chacune des n_pol polarisations en émission à l'infrastructure de réseau.

10. Procédé selon la revendication 7, qui comprend en outre :

- une émission par le terminal de radiocommunication avec une contribution moyenne en puissance sensiblement identique de signaux radio selon lesdites n_pol polarisations à partir de n_ant antennes d'émission,
- une mesure par ladite station de radiocommunication d'une contribution moyenne en puissance de certaines au moins desdits signaux radio émis, et
- une transmission par ladite station de radiocommunication de la contribution moyenne en puissance pour chacune des n_pol polarisations en émission à l'infrastructure de réseau.

11. Procédé selon l'une quelconque des revendications 7 à 10, dans lequel n_pol = 2.

12. Procédé selon l'une quelconque des revendications 7 à 10, dans lequel n_ant = 2.

**Patentansprüche**

1. Funkkommunikationssystem, das Folgendes umfasst:

eine Netzinfrastruktur, die eine Funkkommunikationsstation (10) enthält, und
ein Funkkommunikationsendgerät (13), das umfasst:

Mittel zur Kommunikation mit der Netzinfrastruktur, die die Funkkommunikationsstation enthält, und
Mittel zum Empfangen und Verarbeiten von mehreren Versionen eines mit Polarisationdiversität gemäß n_pol Polarisationen durch die Funkkommunikationsstation gesendeten Signals,
Mittel zum Messen eines mittleren Rauschleistungsbeitrags, der ein Nutzsignal stört, in Bezug auf das gesendete Signal zumindest für bestimmte der Versionen eines durch die Funkkommunikationsstation gemäß einer aus n_pol bestimmten Polarisation gesendeten Signals, und
Mittel zum Übertragen des mittleren Rauschleistungsbeitrags, der für jede aus n_pol bestimmte Polarisation gemessen wird, zur Funkkommunikationsnetzinfrastruktur;

wobei der mittlere Rauschleistungsbeitrag, der für jede aus n_pol bestimmte Polarisation gemessen wird, von der Funkkommunikationsstation verwendet wird, um in adaptiver Weise jeweilige Sendeleistungen der Versionen des Signals zu steuern, um eine optimale Übertragungsleistungsverteilung des Signals zwischen den Polarisationen zu erhalten, auf der Basis der Minimierung einer Kostenfunktion in Bezug auf eine Qualität des vom Funkkommunikationsendgerät empfangenen Signals.

2. System nach Anspruch 1, in dem das Funkkommunikationsendgerät Mittel zum Empfangen und Verarbeiten von mehreren Versionen eines mit Polarisationsdiversität gemäß n_pol Polarisation an n_ant Antennen gesendeten Signals, wobei n_ant größer als oder gleich 2 ist, Mittel zum Auswerten von Leistungsübertragungskoeffizienten für jede der n_pol Polarisationen auf einem Funkausbreitungskanal zumindest von bestimmten der Versionen eines von der Funkkommunikationsstation gesendeten Signals und Mittel zum Übertragen der ausgewerteten Koeffizienten zur Funkkommunikationsnetzinfrastruktur umfasst.

3. System nach Anspruch 1, in dem das Funkkommunikationsendgerät außerdem Mittel zum Senden von mehreren Versionen eines Funksignals gemäß den n_pol Polarisationen von n_ant Sendeantennen umfasst und die Funkkommunikationsstation außerdem Mittel zum Messen eines mittleren Leistungsbeitrags von zumindest bestimmten der Versionen des von den Sendemitteln gesendeten Funksignals für jede der n_Pol Sendepolarisationen und Mittel zum Übertragen des mittleren Leistungsbeitrags für jede der n_pol Sendepolarisationen zur Netzinfrastruktur umfasst.

4. System nach Anspruch 1, in dem das Funkkommunikationsendgerät außerdem Mittel zum Senden der Funksignale gemäß den n_pol Polarisationen von n_ant Sendeantennen mit einem im Wesentlichen identischen mittleren Leistungsbeitrag umfasst und die Funkkommunikationsstation außerdem Mittel zum Messen eines mittleren Leistungsbeitrags zumindest von bestimmten der von den Sendemitteln gesendeten Funksignale und Mittel zum Übertragen des mittleren Leistungsbeitrags für jede der n_pol Sendepolarisationen zur Netzinfrastruktur umfasst.

5. System nach einem der Ansprüche 1 bis 4, in dem n_pol = 2.

6. System nach einem der Ansprüche 2 bis 5, in dem n_ant = 2.

7. Verfahren zur Funkkommunikation zwischen einem Funkkommunikationsendgerät (13) und einer Netzinfrastruktur mit einer Funkkommunikationsstation (10) mit den folgenden Schritten:

- Empfangen und Verarbeiten von mehreren Versionen eines mit Polarisationsdiversität gemäß n_pol Polarisationen durch die Funkkommunikationsstation gesendeten Signals durch das Funkkommunikationsendgerät,
- Messen eines mittleren Rauschleistungsbeitrags, der ein Nutzsignal stört, in Bezug auf das gesendete Signal durch das Funkkommunikationsendgerät zumindest für bestimmte der Versionen eines durch die Funkkommunikationsstation gemäß einer aus n_pol bestimmten Polarisation gesendeten Signals,
- Übertragen des mittleren Rauschleistungsbeitrags durch das Funkkommunikationsendgerät, der für jede aus n_pol bestimmte Polarisation gemessen wird, zur Funkkommunikationsnetzinfrastruktur,
- Messen von Parametern in der Netzinfrastruktur anhand von durch das Funkkommunikationsendgerät übertragenen Signalen,
- Abschätzen einer optimalen Verteilung einer Leistung zwischen den Sendepolarisationen in der Netzinfrastruktur, und
- adaptives Regeln der jeweiligen Sendeleistungen der Versionen des Signals in Abhängigkeit von den gemessenen Parametern zum Erhalten der optimalen Verteilung der Sendeleistung zwischen den Polarisationen,
- wobei der mittlere Rauschleistungsbeitrag, der für jede aus n_pol bestimmte Polarisation gemessen wird, durch die Funkkommunikationsstation verwendet wird, um in adaptiver Weise jeweilige Sendeleistungen der Versionen des Signals zu steuern, um eine optimale Übertragungsleistungsverteilung des Signals zwischen den Polarisationen zu erhalten, auf der Basis der Minimierung einer Kostenfunktion in Bezug auf eine Qualität des vom Funkkommunikationsendgerät empfangenen Signals.

8. Verfahren nach Anspruch 7, das außerdem umfasst:

- Empfangen und Verarbeiten von mehreren Versionen eines mit Polarisationsdiversität gemäß n_pol Polarisationen an n_ant Antennen gesendeten Signals durch das Funkkommunikationsendgerät, wobei n_ant größer als oder gleich 2 ist,
- Auswerten von Leistungsübertragungskoeffizienten durch das Funkkommunikationsendgerät für jede der n_pol Polarisationen auf einem Funkausbreitungskanal von zumindest bestimmten der Versionen eines durch die Funkkommunikationsstation gesendeten Signals, und
- Übertragen der ausgewerteten Koeffizienten durch das Funkkommunikationsendgerät zur Netzinfrastruktur.

9.  Verfahren nach Anspruch 7, das außerdem umfasst:

- Senden der Versionen eines Funksignals gemäß den n_pol Polarisationen von n_ant Sendeantennen durch das Funkkommunikationsendgerät,
- Messen eines mittleren Leistungsbeitrags von zumindest bestimmten der Versionen des gesendeten Funksignals durch die Funkkommunikationsstation für jede der n_pol Sendepolarisationen, und
- Übertragen des mittleren Leistungsbeitrags für jede der n_pol Sendepolarisationen zur Netzinfrastruktur durch die Funkkommunikationsstation.

10.  Verfahren nach Anspruch 7, das außerdem umfasst:

- Senden von Funksignalen gemäß den n_pol Polarisationen von n_ant Sendeantennen mit einem im Wesentlichen identischen mittleren Leistungsbeitrag durch das Funkkommunikationsendgerät,
- Messen eines mittleren Leistungsbeitrags von zumindest bestimmten der gesendeten Funksignale durch die Funkkommunikationsstation, und
- Übertragen des mittleren Leistungsbeitrags für jede der n_pol Sendepolarisationen zur Netzinfrastruktur durch die Funkkommunikationsstation.

11.  Verfahren nach einem der Ansprüche 7 bis 10, in dem n_pol = 2.

12.  Verfahren nach einem der Ansprüche 7 bis 10, in dem n_ant = 2.

**Claims**

1.  A radiocommunication system comprising:

a network infrastructure incorporating a radiocommunication station (10), and a radiocommunication terminal (13) comprising:

means for communicating with the network infrastructure incorporating the radiocommunication station, and means for receiving and processing several versions of a signal transmitted with polarisation diversity according to n_pol polarisations by said radiocommunication station,
means for measuring, at least for some of the versions of a signal transmitted by said radiocommunication station according to a predetermined polarisation among n_pol, a mean power contribution of the noise interfering with a useful signal relating to said transmitted signal, and
means for transmitting said mean power contribution of the noise, measured for each predetermined polarisation among n_pol, to the radiocommunication network infrastructure;

said mean power contribution of the noise, measured for each predetermined polarisation among n_pol, being used by the radiocommunication station for adaptively controlling respective transmission powers of said version of the signal in order to obtain an optimal transmission power distribution of the signal between the polarisations based on the minimisation of a cost function relative to a quality of the signal received by the radiocommunication terminal.

2.  The system according to the claim 1, wherein the radiocommunication terminal comprises means for receiving and processing several version of a signal transmitted with polarisation diversity according to n_pol polarisations on n_ant antennas, n_ant being greater than or equal to 2, means for evaluating, for each of the n_pol polarisations, power transfer coefficients on a radio propagation channel of at least some of the versions of a signal transmitted by said radiocommunication station, and means for transmitting the evaluated coefficients to the radiocommunication network infrastructure.

3. The system according to the claim 1, wherein the radiocommunication terminal also comprises means for transmitting several version of a radio signal according to n_pol polarisations from n_ant transmission antennas, and said radiocommunication station also comprises means for measuring, for each of the n_pol polarisations, a mean power contribution of at least some of the versions of said signal transmitted by said transmission means, and means for transmitting the mean power contribution for each of the n_pol transmit polarisations to the radiocommunication network infrastructure.

4. The system according to the claim 1, wherein the radiocommunication terminal also comprises means for transmitting, with a substantially identical mean power contribution, radio signals according to said n_pol polarisations from n_ant transmission antennas, and said radiocommunication station also comprises means for measuring a mean power contribution of at least some of the radio signals transmitted by said transmission means, and means for transmitting the mean power contribution for each of the n_pol transmit polarisations to the network infrastructure.

5. The system according to any one of claims 1 to 4, wherein n_pol = 2.

6. The system according to any one of claims 2 to 5, wherein n_ant = 2.

7. Method of radiocommunication between a radiocommunication terminal (13) and a network infrastructure incorporating a radiocommunication station (10), comprising the following steps:

- reception and processing by the radiocommunication terminal of several versions of a signal transmitted with polarisation diversity according to n_pol polarisations by said radiocommunication station,
- measurement by said radiocommunication terminal, for at least for some of the versions of a signal transmitted by said radiocommunication station according to a predetermined polarisation among n_pol, of a mean power contribution of the noise interfering with a useful signal relating to said transmitted signal,
- transmission by said radiocommunication terminal of said mean power contribution of the noise, measured for each predetermined polarisation among n_pol, to the radiocommunication network infrastructure,
- measurement of parameters in the network infrastructure on the basis of signals transmitted by the radiocommunication terminal,
- estimation in the network infrastructure of an optimal power distribution between the transmission polarisations, and
- adaptive control of the respective transmission powers of said versions of the signal as a function of said measured parameters in order to obtain the optimal distribution of the transmission power between the polarisations,
- said mean noise power contribution, measured for each predetermined polarisation among n_pol, being used by the radiocommunication station for adaptively controlling respective transmission powers of said versions of the signal in order to obtain an optimal transmission power distribution of the signal between the polarisations based on the minimisation of a cost function relative to a quality of the signal received by the radiocommunication terminal.

8. Method according to claim 7, which also comprises:

- reception and processing by said radiocommunication terminal of several versions of a signal transmitted with polarisation diversity according to n_pol polarisations on n_ant antennas, n_ant being greater than or equal to 2,
- evaluation by said radiocommunication terminal, for each of the n_pol polarisations, power transfer coefficients on a radio propagation channel of at least some of the versions of a signal transmitted by said radiocommunication station, and
- transmission by said radiocommunication terminal of said the evaluated coefficients to the network infrastructure.

9. Method according to claim 7, which also comprises:

- transmission by said radiocommunication terminal of the versions of a radio signal according to said n_pol polarisations on the basis of n_ant transmission antennas,
- measurement by said radiocommunication station, for each of the n_pol transmit polarisations, of a mean power contribution of at least some of the versions of said transmitted radio signal, and

- transmission by said radiocommunication station of the mean power contribution for each of the n_pol transmit polarisations to the network infrastructure.

**10.** Method according to claim 7, which also comprises:

- transmission by the radiocommunication terminal with a substantially identical mean power contribution of radio signals according to said n_pol polarisations on the basis of n_ant transmission antennas,
- measurement by said radiocommunication station of a mean power contribution of at least some of said transmitted radio signal, and
- transmission by said radiocommunication station of the mean power contribution for each of the n_pol transmit polarisations to the network infrastructure.

**11.** Method according to any one of claims 7 to 10, wherein n_pol = 2.

**12.** Method according to any one of claims 7 to 10, wherein n_ant = 2.

FIG. 1

FIG. 2

14  pol_1

15  pol_n_pol

16

17

$\hat{P}_{e,BS}^{pol\_1}$

$\hat{P}_{e,BS}^{pol\_n\_pol}$

27  COMMANDE GAIN

31  DÉTERMINATION RÉPARTITION PUISSANCE

30  MESURES PARAMÈTRES

18

28  TRAITEMENTS ÉMISSION

80  SOURCE

## FIG. 3

14 pol_1

DUP → ÉTAGE RADIO 21 → SONDAGE 22

$\left(N_{r\_MS}^{ant\_j}\right)_{1\leq i\leq n\_ant}$     $\left(P_e^{pol\_i}\right)_{1\leq i\leq n\_pol}$

$\left(h_{ant\_j}^{pol\_1}\right)_{1\leq j\leq n\_ant}$

COMMANDE GAIN 27 ← CALCUL DISTRIBUTION PUISSANCE 26 ← CALCUL MATRICE TRANSFERT ← MRC 24 ← RÉCEPTEUR 23

$\left(\hat{P}_{e,BS}^{pol\_i}\right)_{1\leq i\leq n\_pol}$     $\left(b_k\right)_{1\leq k\leq n\_div}$     25

16

17

18 → TRAITEMENTS ÉMISSION 28 → SOURCE 80

$\left(h_{ant\_j}^{pol\_n\_pol}\right)_{1\leq j\leq n\_ant}$

15 pol_n_pol

DUP → ÉTAGE RADIO 21 → SONDAGE 22

EP 2 299 605 B1

**FIG. 4**

RÉSEAU FIXE

51

COMMUTATEUR UMTS  50

50  COMMUTATEUR UMTS

Iu

Iu

Iu

52

RNC

Iur

RNC

Iur

RNC

52

52

Iub

NODE B

NODE B

NODE B

Iub

NODE B

NODE B

Iub

NODE B

NODE B

NODE B

53

53

55

55

55

54

54a

54b

EP 2 299 605 B1

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6411824 A
- WO 0154230 A
- US 643862 A

**Littérature non-brevet citée dans la description**

- **LEE ; YEH.** Polarization diversity system for mobile radio. *IEEE Trans. Com.,* 1972, vol. COM-20 (5), 912-922